# EUROPEAN PATENT APPLICATION

(11) **EP 4 790 090 A1**
(43) Date of publication of application: **12.08.2026**
(21) Application number: 25883696.4
(22) Date of filing: 18.11.2025
(51) Int. Cl.: C08L 11/00, C08K 3/20, C08K 5/36, C08K 5/39, C08K 5/44, C08K 5/47, C08L 9/00, C08L 9/02, F16L 11/08

(54) **RUBBER COMPOSITION FOR HIGH-PRESSURE HOSE OUTER SURFACE AND HIGH-PRESSURE HOSE**

(30) Priority: 28.11.2024 JP 2024207371
(71) Applicant: Sumitomo Riko Company Limited, Komaki-shi, Aichi 485-8550 (JP)
(72) Inventor: The designation of the inventor has not yet been filed
(74) Representative: Becker, Eberhard
(86) International application number: PCT/JP2025/040193
(87) International publication number: WO 2026/116157

(57) **Abstract**

The present invention provides a high pressure hose that has excellent wear resistance, oil resistance, flame retardancy, and scorch resistance. A high pressure hose outer surface rubber composition includes the following component (A) to component (F), wherein component (A) has a content ratio of 40 to 55 parts by mass, component (B) has a content ratio of 40 to 55 parts by mass, component (C) has a content ratio of 5 to 10 parts by mass, and component (F) has a content of 2 to 5 parts by mass, relative to a total of 100 parts by mass of component (A) to component (C):
(A) chloroprene rubber,
(B) butadiene rubber,
(C) acrylonitrile butadiene rubber,
(D) at least one of a sulfenamide-based vulcanization accelerator and a thiazole-based vulcanization accelerator,
(E) at least one of a dithiocarbamate-based vulcanization accelerator and a thiuram-based vulcanization accelerator, and
(F) sulfur.

## Description

### Technical Field

The present invention relates to a high pressure hose outer surface rubber composition and a high pressure hose. More specifically, the present invention relates to, for example, a high pressure hose for industrial machinery such as construction machinery (construction equipment) and mining machinery, and vehicles.

### Background Art

A high pressure hose used in construction machinery, mining machinery, and the like includes a layer structure that can withstand high internal pressure. For example, Patent Document 1 discloses a high pressure hose in which an intermediate rubber layer is formed on the outer peripheral surface of an inner rubber layer, a reinforcement layer composed of plated wire is formed on the outer peripheral surface of the intermediate rubber layer, an intermediate rubber layer is formed on the outer peripheral surface of the reinforcement layer, and an outer rubber layer is formed on the outer peripheral surface of the intermediate rubber layer.

The same document also proposes using chloroprene rubber (CR), styrene butadiene rubber (SBR), ethylene-propylene-diene rubber (EPDM), blended rubber of SBR and EPDM, acrylonitrile butadiene rubber (NBR), and the like as the rubber components constituting the outer rubber layer.

### Related Art Document

### Patent Document

Patent Document 1: Japanese Patent Application Laid-Open No. 2022-026041

### SUMMARY OF THE INVENTION

### Problem to be Solved by the Invention

The outer layer of a high pressure hose is required to have wear resistance, oil resistance, and flame retardancy. From such a viewpoint, the inventor of the present invention conducted intensive research focusing on a method using a rubber component that combines chloroprene rubber, butadiene rubber, and acrylonitrile butadiene rubber. However, the inventor found that the above method has issues with properties different from wear resistance, oil resistance, and flame retardancy, such as scorch resistance, and it is difficult to satisfy these simultaneously.

The inventor conducted further intensive research from the viewpoint of addressing such issues, and as a result, discovered that the above-described issues can be solved by setting the content ratios of chloroprene rubber, butadiene rubber, and acrylonitrile butadiene rubber respectively within specific ranges, setting the content of sulfur as a vulcanizing agent within a specific range, and further combining this with a specific vulcanization accelerator.

The present invention has been made in view of such circumstances, and provides a high pressure hose that has excellent wear resistance, oil resistance, flame retardancy, and scorch resistance.

### Means for Solving the Problem

That is, the gist of the present invention lies in the following [1] to [6].
[1] A high pressure hose outer surface rubber composition, including the following component (A) to component (F), wherein component (A) has a content ratio of 40 parts by mass to 55 parts by mass, component (B) has a content ratio of 40 parts by mass to 55 parts by mass, component (C) has a content ratio of 5 parts by mass to 10 parts by mass, and component (F) has a content of 2 parts by mass to 5 parts by mass, relative to a total of 100 parts by mass of component (A) to component (C):
   (A) chloroprene rubber,
   (B) butadiene rubber,
   (C) acrylonitrile butadiene rubber,
   (D) at least one of a sulfenamide-based vulcanization accelerator and a thiazole-based vulcanization accelerator,
   (E) at least one of a dithiocarbamate-based vulcanization accelerator and a thiuram-based vulcanization accelerator, and
   (F) sulfur.
[2] The high pressure hose outer surface rubber composition according to [1], further including aluminum hydroxide.
[3] The high pressure hose outer surface rubber composition according to [1] or [2], wherein component (C) has an acrylonitrile amount of 26% by mass to 35% by mass.
[4] The high pressure hose outer surface rubber composition according to any one of [1] to [3], not including a silane coupling agent.
[5] The high pressure hose outer surface rubber composition according to any one of [1] to [4], including a sulfenamide-based vulcanization accelerator as component (D), and including a dithiocarbamate-based vulcanization accelerator as component (E).
[6] A high pressure hose, having an outer rubber layer including the high pressure hose outer surface rubber composition according to any one of [1] to [5].

### Effects of the Invention

By using the high pressure hose outer surface rubber composition of the present invention, it is possible to provide a high pressure hose that has excellent wear resistance, oil resistance, flame retardancy, and scorch resistance.

### BRIEF DESCRIPTION OF THE DRAWINGS

[FIG. 1] is a schematic diagram showing an example of the high pressure hose according to an embodiment of the present invention.
[FIG. 2] is a schematic diagram showing an example of the high pressure hose according to an embodiment of the present invention.

### DESCRIPTION OF THE EMBODIMENTS

Next, embodiments of the present invention will be described in detail. However, the present invention is not limited to these embodiments.

In this specification, unless otherwise specified, the expression of "X to Y" (X and Y are arbitrary numbers) includes the meaning of "X or more and Y or less" as well as the meaning of "preferably more than X" or "preferably less than Y".

Further, regarding numerical ranges described stepwise in this specification, the upper limit value or lower limit value of a numerical range at one stage can be arbitrarily combined with the upper limit value or lower limit value of a numerical range at another stage. In addition, the upper limit value or lower limit value of a numerical range described in this specification can be replaced with values shown in the examples.

### [Outer Rubber Layer]

A high pressure hose outer surface rubber composition according to an embodiment of the present invention (hereinafter, may be referred to as "this outer surface rubber composition") is, for example, a material for an outer rubber layer that constitutes the outermost layer of a multilayer hose, and is a high pressure hose outer surface rubber composition, including the following component (A) to component (F), wherein component (A) has a content ratio of 40 parts by mass to 55 parts by mass, component (B) has a content ratio of 40 parts by mass to 55 parts by mass, component (C) has a content ratio of 5 parts by mass to 10 parts by mass, and component (F) has a content of 2 parts by mass to 5 parts by mass, relative to a total of 100 parts by mass of component (A) to component (C):
(A) chloroprene rubber,
(B) butadiene rubber,
(C) acrylonitrile butadiene rubber,
(D) at least one of a sulfenamide-based vulcanization accelerator and a thiazole-based vulcanization accelerator,
(E) at least one of a dithiocarbamate-based vulcanization accelerator and a thiuram-based vulcanization accelerator, and
(F) sulfur.

The inventor conducted research focusing on an outer surface rubber composition including chloroprene rubber, butadiene rubber, and acrylonitrile butadiene rubber in the research and development of high pressure hoses. In the process of the research and development, it became clear that while it is possible to satisfy the required properties of wear resistance, oil resistance, and flame retardancy to some extent, it is difficult to also satisfy other required properties such as scorch resistance and compression set simultaneously. Specifically, for example, for outer surface rubber compositions including chloroprene rubber, butadiene rubber, and acrylonitrile butadiene rubber, it is difficult to satisfy the required properties of scorch resistance and compression set in cases where the content ratio of chloroprene rubber is relatively high and where the content ratio of acrylonitrile butadiene rubber is relatively high.

The inventor conducted intensive research from the viewpoint of satisfying the required properties of scorch resistance and compression set in addition to wear resistance, oil resistance, and flame retardancy, and in the process, conceived of adjusting chloroprene rubber, butadiene rubber, and acrylonitrile butadiene rubber at blending ratios different from conventional ones to achieve both flame retardancy and wear resistance at a high level, and further blending a relatively large amount of sulfur different from conventional amounts to increase hardness and crosslink density, thereby enhancing wear resistance and oil resistance. However, it is difficult to satisfy the required properties regarding scorch resistance and compression set by simply increasing the content of sulfur.

As a result of further experiment and verification, the inventor discovered that it becomes possible to satisfy the required properties of scorch resistance and compression set in addition to wear resistance, oil resistance, and flame retardancy in a high pressure hose outer surface rubber composition including chloroprene rubber, butadiene rubber, and acrylonitrile butadiene rubber by adjusting, among 100 parts by mass of these rubber components, the content of chloroprene rubber to 40 parts by mass to 55 parts by mass, the content of butadiene rubber to 40 parts by mass to 55 parts by mass, the content of acrylonitrile butadiene rubber to 5 parts by mass to 10 parts by mass, and further the content of sulfur to a specific range of 2 parts by mass to 5 parts by mass, and furthermore, by using at least one of a sulfenamide-based vulcanization accelerator and a thiazole-based vulcanization accelerator with at least one of a dithiocarbamate-based vulcanization accelerator and a thiuram-based vulcanization accelerator in combination as vulcanization accelerators.

By using this outer surface rubber composition, it is possible to provide a high pressure hose that has excellent wear resistance, oil resistance, flame retardancy, and scorch resistance.

Furthermore, by using this outer surface rubber composition, it is possible to provide a high pressure hose that also has excellent compression set.

Hereinafter, this outer surface rubber composition and a high pressure hose using this outer surface rubber composition (hereinafter, may be referred to as "this hose") will be described in detail.

### <<(A) Chloroprene Rubber>>

This outer surface rubber composition includes (A) chloroprene rubber (CR) from the viewpoints of oil resistance, flame retardancy, and the like. From the viewpoint of achieving the effects of the present invention, the content ratio of component (A) is 40 parts by mass to 55 parts by mass relative to a total of 100 parts by mass of component (A) to component (C). That is, the proportion occupied by component (A) is 40 parts by mass to 55 parts by mass in the case of the total of component (A) to component (C) being 100 parts by mass.

The content ratio of component (A) can be appropriately set within the above range, and may be, for example, 40 parts by mass to 50 parts by mass or 40 parts by mass to 48 parts by mass.

Conventionally known components in this technical field can be appropriately used as component (A), and are used alone or in combination of two or more types.

Component (A) is not limited to the following, but examples include sulfur modified type chloroprene rubber and non-sulfur modified type chloroprene rubber. Among these, non-sulfur modified type chloroprene rubber is preferable. Specifically, xanthogen modified chloroprene rubber and mercapto modified chloroprene rubber are preferable, and among these, mercapto modified chloroprene rubber is preferable in terms of compression set.

The microstructure of chloroprene rubber is not particularly limited, but for example, chloroprene rubber having a trans-1,4 bond unit content of 90% by mass or more can be appropriately used.

The Mooney viscosity (ML₁₊₄ (100°C)) of component (A) is not particularly limited, but is, for example, 35 to 80, and preferably 43 to 53.

The Mooney viscosity is measured in accordance with JIS K 6300-1:2013, using an L-shaped rotor under conditions of preheating time of 1 minute, rotor rotation time of 4 minutes, and test temperature of 100°C.

### <<(B) Butadiene Rubber>>

This outer surface rubber composition includes (B) butadiene rubber (BR) from the viewpoint of wear resistance and the like. From the viewpoint of achieving the effects of the present invention, the content ratio of component (B) is 40 parts by mass to 55 parts by mass relative to a total of 100 parts by mass of component (A) to component (C). That is, the proportion occupied by component (B) is 40 parts by mass to 55 parts by mass in the case of the total of component (A) to component (C) being 100 parts by mass.

The content ratio of component (B) can be appropriately set within the above range, and may be, for example, 45 parts by mass to 50 parts by mass.

Conventionally known components in this technical field can be appropriately used as component (B), and are used alone or in combination of two or more types.

The microstructure of butadiene rubber (BR) is not particularly limited, but for example, low cis-BR having a cis-1,4 bond unit content of 50% by mass or less, such as about 30% by mass to 40% by mass, or high cis-BR of 90% by mass or more can be appropriately used.

The Mooney viscosity (ML₁₊₄ (100°C)) of component (B) is not particularly limited, but is, for example, 30 to 55, and preferably 35 to 45.

### <<(C) Acrylonitrile Butadiene Rubber>>

This outer surface rubber composition includes (C) acrylonitrile butadiene rubber (NBR) from the viewpoint of oil resistance and the like. From the viewpoint of achieving the effects of the present invention, the content ratio of component (C) is 5 parts by mass to 10 parts by mass relative to a total of 100 parts by mass of component (A) to component (C). That is, the proportion occupied by component (C) is 5 parts by mass to 10 parts by mass in the case of the total of component (A) to component (C) being 100 parts by mass.

Conventionally known components in this technical field can be appropriately used as component (C), and are used alone or in combination of two or more types.

The acrylonitrile amount (AN amount) of acrylonitrile butadiene rubber (NBR) is not particularly limited, but is preferably 26% by mass to 35% by mass, and more preferably 29% by mass to 33% by mass, from the viewpoint of further improving oil resistance.

The Mooney viscosity (ML₁₊₄ (100°C)) of component (C) is not particularly limited, but is, for example, 45 to 75, and preferably 50 to 70.

This outer surface rubber composition may optionally include rubber components other than component (A) to component (C), but it is preferable to use component (A) to component (C) as the main components of the rubber components. Specifically, the total content of component (A) to component (C) is preferably 80% by mass or more, more preferably 90% by mass or more, even more preferably 95% by mass or more, and particularly preferably 100% by mass, relative to the total amount (100% by mass) of rubber components included in this outer surface rubber composition.

Further, the ratio of the total content of component (A) to component (C) relative to the total amount (100% by mass) of this outer surface rubber composition is, for example, 30% by mass to 60% by mass, and preferably 38% by mass to 50% by mass.

### <<(D) At Least One of Sulfenamide-based Vulcanization Accelerator and Thiazole-based Vulcanization Accelerator>>

This outer surface rubber composition includes, as a vulcanization accelerator, at least one of a sulfenamide-based vulcanization accelerator and a thiazole-based vulcanization accelerator. That is, this outer surface rubber composition includes a sulfenamide-based vulcanization accelerator, includes a thiazole-based vulcanization accelerator, or includes both. These are used alone or in combination of two or more types. Among these, a sulfenamide-based vulcanization accelerator is preferable from the viewpoints of scorch resistance, adhesion to the reinforcement layer, and the like.

Examples of the sulfenamide-based vulcanization accelerator include N-oxydiethylene-2-benzothiazolylsulfenamide (NOBS), N-cyclohexyl-2-benzothiazolylsulfenamide (CBS), N-t-butyl-2-benzothiazolylsulfenamide (BBS), N,N'-dicyclohexyl-2-benzothiazolylsulfenamide, and the like. These are used alone or in combination of two or more types.

Examples of the thiazole-based vulcanization accelerator include dibenzothiazyl disulfide (MBTS), 2-mercaptobenzothiazole (MBT), 2-mercaptobenzothiazole sodium salt (NaMBT), 2-mercaptobenzothiazole zinc salt (ZnMBT), 2-(4'-morpholinodithio)benzothiazole, and the like. These are used alone or in combination of two or more types.

From the viewpoint of remarkably achieving the effects of the present invention, the content of component (D) is, for example, preferably 0.8 parts by mass to 1.6 parts by mass, more preferably 0.9 parts by mass to 1.4 parts by mass, and even more preferably 1.2 parts by mass to 1.4 parts by mass, relative to a total of 100 parts by mass of component (A) to component (C).

### <<(E) At Least One of Dithiocarbamate-based Vulcanization Accelerator and Thiuram-based Vulcanization Accelerator>>

This outer surface rubber composition includes, as a vulcanization accelerator, at least one of a dithiocarbamate-based vulcanization accelerator and a thiuram-based vulcanization accelerator. That is, this outer surface rubber composition includes a dithiocarbamate-based vulcanization accelerator, includes a thiuram-based vulcanization accelerator, or includes both. These are used alone or in combination of two or more types. Among these, a dithiocarbamate-based vulcanization accelerator is preferable from the viewpoint of compression set and the like.

Examples of the dithiocarbamate-based vulcanization accelerator include zinc dibutyldithiocarbamate, piperidinium pentamethylenedithiocarbamate, pipecolinium pipecolyldithiocarbamate, zinc diethyldithiocarbamate, zinc N-ethyl-N-phenyldithiocarbamate, zinc dibenzyldithiocarbamate, zinc N-pentamethylenedithiocarbamate, zinc dimethyldithiocarbamate, and the like. These are used alone or in combination of two or more types.

Examples of the thiuram-based vulcanization accelerator include tetramethylthiuram disulfide (TMTD), tetraethylthiuram disulfide (TETD), tetrabutylthiuram disulfide (TBTD), tetrakis(2-ethylhexyl)thiuram disulfide (TOT), tetrabenzylthiuram disulfide (TBzTD), tetramethylthiuram monosulfide (TMTM), and the like. These are used alone or in combination of two or more types.

From the viewpoint of remarkably achieving the effects of the present invention, the content of component (E) is preferably 0.2 parts by mass to 0.8 parts by mass, more preferably 0.3 parts by mass to 0.6 parts by mass, and even more preferably 0.4 parts by mass to 0.5 parts by mass, relative to a total of 100 parts by mass of component (A) to component (C).

It is important that this outer surface rubber composition uses (D) and (E) in combination as vulcanization accelerators. In the case of including only one of (D) and (E) or in the case of including vulcanization accelerators of different combinations, it tends to be difficult to sufficiently achieve the effects of the present invention.

In this outer surface rubber composition, from the viewpoint of remarkably achieving the effects of the present invention, the mass ratio of component (D) to component (E) [(D)/(E)] is preferably 1.0 to 8.0, and more preferably 2.3 to 5.0.

### <<(F) Sulfur>>

This outer surface rubber composition includes (F) sulfur. From the viewpoint of achieving the effects of the present invention, the content of component (F) is 2 parts by mass to 5 parts by mass relative to a total of 100 parts by mass of component (A) to component (C). In the case of the content of component (F) exceeding the above range, for example, it tends to be difficult to achieve both scorch resistance and compression set.

The content of component (F) can be appropriately set within the above range, and may be, for example, 2.5 parts by mass to 4 parts by mass.

Examples of (F) sulfur include powder sulfur, precipitated sulfur, colloidal sulfur, insoluble sulfur, highly dispersible sulfur, soluble sulfur, and the like that are generally used in this technical field. These may be used alone or in combination of two or more types.

### <<Other Components>>

In addition to the above component (A) to component (F), this outer surface rubber composition may optionally include hydrated metal compounds such as aluminum hydroxide and magnesium hydroxide, optional materials such as silica and carbon black as needed, and may also include optional materials such as plasticizer, antioxidant, and vulcanization aid as needed.

### (Aluminum Hydroxide)

This outer surface rubber composition preferably includes aluminum hydroxide from the viewpoint of wear resistance. The average particle diameter of aluminum hydroxide is not particularly limited, but is, for example, 0.5 µm to 3.0 µm, and preferably 0.8 µm to 1.5 µm. The average particle diameter is volume average particle diameter, and can be derived, for example, by measurement using a laser diffraction scattering particle size distribution analyzer using samples arbitrarily extracted from a population.

From the viewpoint of remarkably achieving the effects of the present invention, the content of aluminum hydroxide is preferably 5 parts by mass to 15 parts by mass, and more preferably 7.5 parts by mass to 10 parts by mass, relative to a total of 100 parts by mass of component (A) to component (C).

### (Silica)

Conventionally known silica in this technical field can be appropriately used, and may be crystalline or amorphous. These are used alone or in combination of two or more types.

The average particle diameter of silica is not particularly limited, but is preferably in the range of 5 µm to 40 µm, and more preferably 15 µm to 25 µm, for example. The above average particle diameter can be measured using, for example, a laser diffraction scattering particle size distribution analyzer.

The pH of silica is not particularly limited, but is, for example, 5.0 to 11.5, and preferably 5.5 to 8.5.

From the viewpoint of remarkably achieving the effects of the present invention, the content of silica is preferably 5 parts by mass to 15 parts by mass, and more preferably 7.5 parts by mass to 12.5 parts by mass, relative to a total of 100 parts by mass of component (A) to component (C).

### (Carbon Black)

Conventionally known carbon black in this technical field can be appropriately used, and examples include carbon black of various grades such as SAF grade, ISAF grade, HAF grade, MAF grade, FEF grade, GPF grade, SRF grade, FT grade, and MT grade. These are used alone or in combination of two or more types. Among these, FEF grade carbon black is preferable from the viewpoint of remarkably achieving the effects of the present invention, particularly from the viewpoints of wear resistance and scorch resistance.

The average particle diameter of carbon black is, for example, preferably 70 nm or less, more preferably 55 nm or less, and even more preferably 45 nm or less, from the viewpoints of wear resistance and scorch resistance. Although the lower limit is not particularly set, 20 nm or more is preferable. The average particle diameter of carbon black can be measured using TEM or the like.

From the viewpoint of remarkably achieving the effects of the present invention, the content of carbon black is preferably 50 parts by mass to 90 parts by mass, and more preferably 60 parts by mass to 80 parts by mass, relative to a total of 100 parts by mass of component (A) to component (C).

### (Plasticizer)

Examples of the plasticizer include aromatic oil, ether ester plasticizer, process oil, and the like. These are used alone or in combination of two or more types.

Examples of the aromatic oil include Diana Process AC-12, Diana Process AC-460, Diana Process AH-16 (all manufactured by Idemitsu Showa Shell Co., Ltd.), JSO Aroma 790 (manufactured by Japan Sun Oil Co., Ltd.), Aromax 1, Aromax 3 (all manufactured by Fuji Kosan Co., Ltd.), and the like. Further, examples of the ether ester plasticizer include plasticizers having both ether bonds and ester bonds in one molecule, specifically, adipic acid ether ester plasticizer such as bis[2-(2-butoxyethoxy)ethyl] adipate. Examples of the process oil include naphthenic oil, paraffinic oil, and the like.

The content of the plasticizer is not particularly limited, but is, for example, 10 parts by mass to 25 parts by mass, and preferably 15 parts by mass to 20 parts by mass, relative to a total of 100 parts by mass of component (A) to component (C).

### (Antioxidant)

Examples of the antioxidant include carbamate antioxidant, phenylenediamine antioxidant, phenol antioxidant, phenylamine antioxidant, diphenylamine antioxidant, quinoline antioxidant, imidazole antioxidant, waxes, and the like. These are used alone or in combination of two or more types.

The content of the antioxidant is not particularly limited, but is, for example, 1 part by mass to 10 parts by mass, and preferably 3 parts by mass to 8 parts by mass, relative to a total of 100 parts by mass of component (A) to component (C).

### (Vulcanization Aid)

Examples of the vulcanization aid include zinc oxide, zinc white (ZnO), stearic acid, magnesium oxide, and the like. These are used alone or in combination of two or more types.

The content of the vulcanization aid is not particularly limited, but is, for example, 3 parts by mass to 10 parts by mass, and preferably 5 parts by mass to 8 parts by mass, relative to a total of 100 parts by mass of component (A) to component (C).

This outer surface rubber composition preferably does not include a silane coupling agent from the viewpoint of suppressing deterioration of scorch resistance.

For example, it is preferable not to include a sulfide silane coupling agent. Specifically, examples include bis-(3-(triethoxysilyl)-propyl)-disulfide, bis(3-triethoxysilylpropyl)trisulfide, bis-(3-(triethoxysilyl)-propyl)-tetrasulfide, bis(3-trimethoxysilylpropyl)disulfide, bis(2-triethoxysilylethyl)tetrasulfide, bis(2-trimethoxysilylethyl)tetrasulfide, bis(3-triethoxysilylpropyl)disulfide, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 2-trimethoxysilylethyl-N,N-dimethylthiocarbamoyltetrasulfide, 3-trimethoxysilylpropylbenzothiazolyltetrasulfide, 3-triethoxysilylpropylbenzothiazolyltetrasulfide, 3-triethoxysilylpropylmethacrylate monosulfide, 3-trimethoxysilylpropylmethacrylate monosulfide, and the like, and it is preferable that this outer surface rubber composition does not include these silane coupling agents.

Further, other silane coupling agents include, for example, mercapto silane coupling agent, amine silane coupling agent, epoxy silane coupling agent, vinyl silane coupling agent, and the like, but it is preferable that this outer surface rubber composition does not include these silane coupling agents, either.

"Does not include a silane coupling agent" means that the composition substantially does not include a silane coupling agent, and specifically means an amount of 0.1% by mass or less relative to the total amount (100% by mass) of this outer surface rubber composition, which is preferably 0.05% by mass or less, particularly preferably 0.01% by mass or less, and most preferably 0% by mass.

### [Preparation of Outer Surface Rubber Composition]

The above rubber composition can be prepared, for example, by appropriately blending the above component (A) to component (F) and, as needed, various optional materials as described above, and kneading these using a kneading machine such as kneader, roll, and Banbury mixer.

### [Properties of Outer Surface Rubber Composition]

By using this outer surface rubber composition, it is possible to provide a high pressure hose that has excellent wear resistance, oil resistance, flame retardancy, scorch resistance, and compression set. Specifically, for example, this outer surface rubber composition preferably has a wear amount of 0.25 g or less, and more preferably 0.2 g or less, as measured by the method described in the examples below.

This outer surface rubber composition preferably has a volume change rate ΔV (%) of 125% or less, and more preferably 100% or less, as measured by the method described in the examples below.

This outer surface rubber composition preferably has a scorch time of 15 minutes or more, and more preferably 20 minutes or more, as measured by the method described in the examples below.

This outer surface rubber composition preferably has a compression set (%) of 50% or less, and more preferably 40% or less, as measured by the method described in the examples below.

This outer surface rubber composition preferably has an oxygen index of more than 21, and more preferably 26 or more, as measured by the method described in the examples below.

### [Layer Structure of Hose]

This hose is not particularly limited in terms of layer configuration or number of layers as long as this hose has an outer rubber layer including this outer surface rubber composition. For example, a hose has a layer structure that includes an inner rubber layer composed of an inner surface rubber composition, a reinforcement layer composed of plated wire, and a rubber layer composed of this outer surface rubber composition on the outside of the reinforcement layer.

### (Reinforcement Layer)

This hose usually has a reinforcement layer composed of plated wire to reinforce the strength of the entire hose. Specifically, the reinforcement layer is a layer formed by braiding plated wire in a braid shape, spiral shape, or the like.

As the wire (element wire) to be plated, metal wire, particularly steel wire or the like, is suitably used. Further, examples of plating treatment include copper plating, zinc plating, brass (copper-zinc alloy) plating, nickel plating, tin plating, cobalt plating, and the like. Among these, brass (copper-zinc alloy) plating is preferable.

Specific examples of the layer structure in this hose include, but are not limited to, a hose having a three-layer structure of "inner rubber layer/reinforcement layer/outer rubber layer" in which the outer rubber layer is a rubber layer composed of this outer surface rubber composition. Another example is a hose having a four-layer structure of "inner rubber layer/intermediate rubber layer/reinforcement layer/outer rubber layer" in which the outer rubber layer is a rubber layer composed of this outer surface rubber composition. Further, another example is a hose having a five-layer structure of "inner rubber layer/reinforcement layer 1/intermediate rubber layer/reinforcement layer 2/outer rubber layer" in which the outer rubber layer is a rubber layer composed of this outer surface rubber composition.

The inner diameter of this hose is not particularly limited, but is usually 5 mm to 85 mm, and preferably 6 mm to 80 mm. Further, the outer diameter of this hose is usually 9 mm to 100 mm, and preferably 10 mm to 85 mm.

In addition, the thickness of each layer is not particularly limited, but the thickness of the inner rubber layer is, for example, 0.7 mm to 4.0 mm, and preferably 1.0 mm to 3.0 mm. The thickness of the entire intermediate rubber layer is, for example, 0.1 mm to 0.5 mm, and preferably 0.2 mm to 0.4 mm. The thickness of the outer rubber layer is, for example, 0.5 mm to 2.5 mm, and preferably 0.8 mm to 2.0 mm.

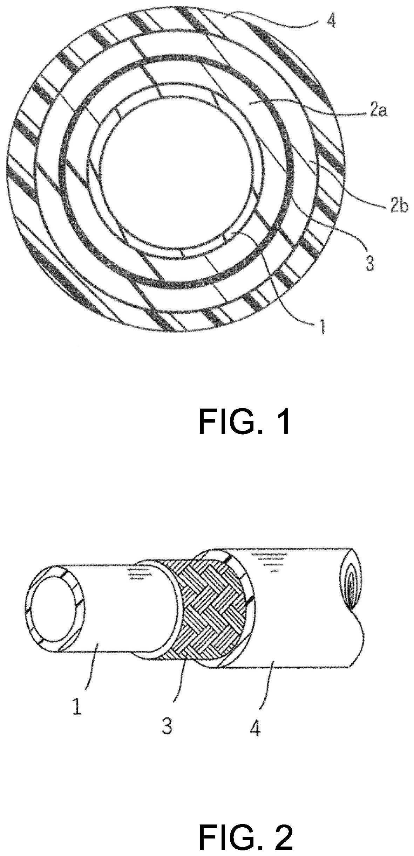

Furthermore, an embodiment of this hose will be described with reference to the drawing, but the present invention is not limited to the structure shown in the drawing. The high pressure hose shown in FIG. 1 is a hose having a five-layer structure in which an intermediate rubber layer 2a is formed on the outer peripheral surface of an inner rubber layer 1, a reinforcement layer 3 composed of plated wire is formed on the outer peripheral surface of the intermediate rubber layer 2a, an intermediate rubber layer 2b is formed on the outer peripheral surface of the reinforcement layer 3, and an outer rubber layer 4 is formed on the outer peripheral surface of the intermediate rubber layer 2b. In the hose, the outer rubber layer 4 can be a rubber layer composed of this outer surface rubber composition.

Further, for example, the high pressure hose shown in FIG. 2 is a hose having a three-layer structure in which a reinforcement layer 3 composed of plated wire is formed on the outer peripheral surface of an inner rubber layer 1, and an outer rubber layer 4 is formed on the outer peripheral surface of the reinforcement layer 3. In the hose, the outer rubber layer 4 can be a rubber layer composed of this outer surface rubber composition.

In the case of forming the inner rubber layer 1 as in the high pressure hose shown in FIG. 1, the material thereof is preferably rubber having excellent oil resistance, and examples include acrylonitrile butadiene rubber (NBR), hydrogenated acrylonitrile butadiene rubber (HNBR), acrylic rubber (ACM), ethylene acrylate rubber (AEM), chlorinated polyethylene (CM), chlorosulfonated polyethylene (CSM), fluorine rubber (FKM), and the like. These are used alone or in combination of two or more types. Among these, NBR is preferable in terms of oil resistance, strength, and cost. In addition to rubber such as NBR, a filler, plasticizer, stearic acid, zinc oxide, vulcanizing agent, vulcanization accelerator, and the like may be appropriately blended as needed.

### [Manufacturing Method]

The manufacturing method of this hose will be described using an embodiment of the present invention shown in FIG. 1 as an example. First, using an extrusion molding machine, a rubber composition for forming the inner rubber layer is extruded onto a mandrel to form the inner rubber layer 1. Next, a rubber composition for forming the intermediate rubber layer is extruded onto the outer peripheral surface of the inner rubber layer 1 to form the intermediate rubber layer 2a. Subsequently, plated wire such as brass plated wire is spirally braided on the outer peripheral surface of the intermediate rubber layer 2a to form the reinforcement layer 3. Thereafter, a rubber composition for forming the intermediate rubber layer is extruded onto the outer peripheral surface of the reinforcement layer 3 to form the intermediate rubber layer 2b. Furthermore, a rubber composition for forming the outer rubber layer (this outer surface rubber composition) is extruded onto the outer peripheral surface of the intermediate rubber layer 2b to form the outer rubber layer 4. Finally, this laminate is vulcanized (steam vulcanization or the like) under predetermined conditions (for example, 140°C to 170°C × 10 minutes to 60 minutes) to produce the high pressure hose having the layer structure shown in FIG. 1.

In addition, for example, in the case of manufacturing a hose having a three-layer structure of "inner rubber layer/reinforcement layer/outer rubber layer" as shown in FIG. 2, similarly to the above, using an extrusion molding machine, an inner surface rubber composition is extruded onto a mandrel to form the inner rubber layer 1. Next, plated wire such as brass plated wire is spirally braided on the outer peripheral surface of the inner rubber layer 1 to form the reinforcement layer 3, and thereafter, this outer surface rubber composition is extruded onto the outer peripheral surface of the reinforcement layer 3 to form the outer rubber layer 4. Finally, this laminate is vulcanized (steam vulcanization or the like) under predetermined conditions (for example, 140°C to 170°C × 10 minutes to 60 minutes) to produce the high pressure hose having a three-layer structure.

### [Applications]

This hose is suitable for use as a high pressure hose, more specifically a high pressure hydraulic hose used for circulating high pressure fluid in construction machinery, civil engineering machinery, industrial machinery, vehicles, ships, and the like.

### Examples

Next, examples will be described together with comparative examples. However, the present invention is not limited to these examples.

First, prior to the examples and comparative examples, the materials shown below were prepared.

### <<(A) Chloroprene Rubber>>

▪ Skyprene B-30 (manufactured by Tosoh Corporation)

### <<(B) Butadiene Rubber>>

▪ UBEPOL BR-150 (manufactured by UBE Corporation)

### <<(C) Acrylonitrile Butadiene Rubber>>

▪ Nipol DN202 (manufactured by Zeon Corporation, AN amount 31%)

### <<(D) Sulfenamide-based/thiazole-based Vulcanization Accelerator>>

▪ Noxeller MSA (manufactured by Ouchi Shinko Chemical Industrial Co., Ltd., sulfenamide-based vulcanization accelerator)
▪ Noxeller DM (manufactured by Ouchi Shinko Chemical Industrial Co., Ltd., thiazole-based vulcanization accelerator)

### <<(E) Dithiocarbamate-based/thiuram-based Vulcanization Accelerator>>

▪ Noxeller BZ (manufactured by Ouchi Shinko Chemical Industrial Co., Ltd., dithiocarbamate-based vulcanization accelerator)
▪ Noxeller TET (manufactured by Ouchi Shinko Chemical Industrial Co., Ltd., thiuram-based vulcanization accelerator (1))
▪ Noxeller TS (manufactured by Ouchi Shinko Chemical Industrial Co., Ltd., thiuram-based vulcanization accelerator (2))

### <<Other Vulcanization Accelerators>>

▪ Noxeller D (manufactured by Ouchi Shinko Chemical Industrial Co., Ltd., guanidine-based vulcanization accelerator)

### <<(F) Sulfur>>

▪ Sulfur (manufactured by Hosoi Chemical Industry Co., Ltd., 325 mesh)

The content of sulfur in Table 1 indicates the amount converted to the active ingredient.

### <<Silica>>

▪ Nipsil VN3 (manufactured by Tosoh Silica Corporation)

### <<Aluminum Hydroxide>>

▪ KH-101 (manufactured by KC Corporation)

### [Examples 1 to 9, Comparative Examples 1 to 5]

Each component shown in Table 1 below was blended at the ratio shown in the same table, and further carbon black (Seast SO: manufactured by Tokai Carbon Co., Ltd.) was blended at 70 parts by mass, stearic acid at 1.5 parts by mass, zinc oxide at 5 parts by mass, plasticizer at 20 parts by mass, and antioxidant at 7 parts by mass, and kneaded using a kneader to prepare an unvulcanized rubber composition. The following properties were evaluated using the rubber compositions obtained for the examples and comparative examples. The results are shown together in Table 1 below.

### <<Wear Resistance>>

Using each rubber composition, press vulcanization was performed at 150°C for 60 minutes to prepare columnar vulcanized rubber samples (diameter 16.0 mm, height 6.0 mm). Then, using these vulcanized rubber samples, the wear amount (g) was measured in accordance with JIS K6264-2 DIN wear test (40 m wear distance test). The evaluation was as follows: wear amount less than 0.2 g was rated as "⊚ (excellent)", 0.2 g or more and less than 0.25 g as "∘ (very good)", and 0.25 g or more and less than 0.5 g as "△ (good)". On the other hand, 0.5 g or more was rated as "× (poor)".

### <<Oil Resistance>>

Using each rubber composition, press vulcanization was performed at 150°C for 30 minutes to prepare rubber sheets (thickness: 2 mm, length: 100 mm, width: 100 mm). Then, using these rubber sheets, JIS No. 5 dumbbells were molded, and the volume change rate ΔV (%) of each rubber composition after immersion in IRM903 test oil at 120°C for 168 hours was measured in accordance with JIS K 6258:2003. The evaluation was as follows: ΔV (%) less than 100% was rated as "⊚ (excellent)", and 100% or more and less than 125% as "∘ (very good)". On the other hand, 125% or more was rated as "× (poor)".

### <<Scorch Resistance>>

Using each rubber composition, the scorch time at 121°C was measured in accordance with JIS K 6300-1. The evaluation was as follows: scorch time of 20 minutes or more was rated as " ⊚ (excellent)", less than 20 minutes and 15 minutes or more as "∘ (very good)", and on the other hand, less than 15 minutes as "× (poor)".

### <<Compression Set>>

Using the above rubber composition, press vulcanization was performed under conditions of 150°C for 60 minutes to prepare columnar vulcanized rubber samples (diameter 29.0 mm, height 12.5 mm). Using these vulcanized rubber samples, compression set was measured in accordance with JIS K 6262 under conditions of temperature 120°C, test time 72 hours, and compression ratio 25%. The evaluation was as follows: compression set less than 40% was rated as " ⊚ (excellent)", 40% or more and 50% or less as "∘ (very good)", and on the other hand, exceeding 50% as "× (poor)".

### <<Flame Retardancy>>

Using the above rubber composition, press vulcanization was performed under conditions of 150°C for 60 minutes to prepare rubber sheets (thickness: 2 mm, length: 100 mm, width: 100 mm). Then, to evaluate the flame resistance of these rubber sheets, the minimum oxygen concentration (volume %) required to sustain combustion of the rubber sheets was measured as the oxygen index in accordance with JIS K 7201. The evaluation was as follows: oxygen index of 26 or more was rated as "⊚ (excellent)", less than 26 and 21 or more as "∘ (very good)", and on the other hand, less than 21 as "× (poor)".

**[Table 1]**

| (Parts by mass) | | | | | | | | | | | | | | | |
|---|---|---|---|---|---|---|---|---|---|---|---|---|---|---|---|
| | | Example | | | | | | | | | Comparative Example | | | | |
| | | 1 | 2 | 3 | 4 | 5 | 6 | 7 | 8 | 9 | 1 | 2 | 3 | 4 | 5 |
| (A) | Chloroprene rubber | 45 | 45 | 45 | 55 | 40 | 45 | 45 | 45 | 45 | 45 | 45 | 45 | 45 | 60 |
| (B) | Butadiene rubber | 50 | 50 | 50 | 40 | 50 | 50 | 50 | 50 | 50 | 50 | 50 | 50 | 40 | 35 |
| (C) | Acrylonitrile butadiene rubber | 5 | 5 | 5 | 5 | 10 | 5 | 5 | 5 | 5 | 5 | 5 | 5 | 15 | 5 |
| (D) | Sulfenamide-based vulcanization accelerator | 1.2 | - | 1.2 | 1.2 | 1.2 | 1.2 | 1.2 | 1.2 | 0.8 | 1.6 | - | 1.2 | 1.2 | 1.2 |
| | Thiazole-based vulcanization accelerator | - | 1.2 | - | - | - | - | - | - | - | - | - | - | - | - |
| (E) | Dithiocarbamate-based vulcanization accelerator | 0.4 | 0.4 | - | 0.4 | 0.4 | 0.4 | 0.4 | 0.4 | 0.8 | - | - | 0.4 | 0.4 | 0.4 |
| | Thiuram-based vulcanization accelerator (1) | - | - | 0.4 | - | - | - | - | - | - | - | - | - | - | - |
| | Thiuram-based vulcanization accelerator (2) | - | - | - | - | - | - | - | - | - | - | 0.4 | - | - | - |
| | Guanidine-based vulcanization accelerator | - | - | - | - | - | - | - | - | - | - | 1.2 | - | - | - |
| (F) | Sulfur | 3 | 3 | 3 | 3 | 3 | 2 | 5 | 3 | 3 | 3 | 3 | 6 | 3 | 3 |
| | Silica | 10 | 10 | 10 | 10 | 10 | 10 | 10 | 10 | 10 | 10 | 10 | 10 | 10 | 10 |
| | Aluminum hydroxide | 7.5 | 7.5 | 7.5 | 7.5 | 7.5 | 7.5 | 7.5 | - | 7.5 | 7.5 | 7.5 | 7.5 | 7.5 | 7.5 |
| Evaluation | Wear resistance | ⊚ | ⊚ | ⊚ | ○ | ⊚ | ⊚ | ○ | ⊚ | ○ | ○ | ○ | Δ | ○ | ○ |
| | Oil resistance | ⊚ | ○ | ○ | ⊚ | ⊚ | ○ | ⊚ | ⊚ | ⊚ | × | ○ | ⊚ | ⊚ | ⊚ |
| | Scorch resistance | ○ | ○ | ○ | ○ | ⊚ | ○ | ○ | ⊚ | ○ | ○ | × | × | × | × |
| | Compression set | ○ | ○ | ⊚ | ○ | ○ | ⊚ | ○ | ○ | ⊚ | ○ | ○ | × | × | × |
| | Flame retardancy | ○ | ○ | ○ | ○ | ○ | ○ | ○ | ○ | ○ | ○ | ○ | ○ | ○ | ○ |

From the results in Table 1 above, it can be understood that the rubber compositions according to the examples of the present invention excel in all of wear resistance, oil resistance, flame retardancy, scorch resistance, and compression set.

In contrast, comparative example 1 uses only a sulfenamide-based vulcanization accelerator as the vulcanization accelerator and does not satisfy the requirements of the present invention, so it can be understood that comparative example 1 is not satisfactory in terms of oil resistance.

Further, comparative example 2 uses a thiuram-based vulcanization accelerator and a guanidine-based vulcanization accelerator as vulcanization accelerators and does not satisfy the requirements of the present invention, so it can be understood that comparative example 2 is not satisfactory in terms of scorch resistance.

In addition, comparative example 3 has a high content of sulfur and does not satisfy the requirements of the present invention, so it can be understood that comparative example 3 is not satisfactory in terms of scorch resistance and compression set.

Further, comparative example 4 has a high content of (C) acrylonitrile butadiene rubber and does not satisfy the requirements of the present invention, so it can be understood that comparative example 4 is not satisfactory in terms of scorch resistance and compression set.

Further, comparative example 5 does not satisfy the requirements of the present invention for the contents of (A) chloroprene rubber and (B) butadiene rubber, so it can be understood that comparative example 5 is not satisfactory in terms of scorch resistance and compression set.

Furthermore, as a result of detailed comparison between the flame retardancy evaluation result of example 8 and the flame retardancy evaluation result of example 1, it was confirmed that example 1 exhibits a better flame retardant effect.

Although the above examples have shown specific forms of the present invention, the examples are merely illustrative and should not be interpreted in a limiting manner. Various modifications apparent to those skilled in the art are intended to be included within the scope of the present invention.

### Industrial Applicability

The high pressure hose of the present invention is useful as a high pressure hydraulic hose for construction machinery (construction equipment), mining machinery, and industrial vehicles (forklifts, automated guided vehicles, etc.).

### Description of Reference Numerals

1... inner rubber layer
2, 2a, 2b... intermediate rubber layer
3... reinforcement layer
4... outer rubber layer

## Claims

1. A high pressure hose outer surface rubber composition, comprising the following component (A) to component (F), wherein component (A) has a content ratio of 40 parts by mass to 55 parts by mass, component (B) has a content ratio of 40 parts by mass to 55 parts by mass, component (C) has a content ratio of 5 parts by mass to 10 parts by mass, and component (F) has a content of 2 parts by mass to 5 parts by mass, relative to a total of 100 parts by mass of component (A) to component (C):
(A) chloroprene rubber,
(B) butadiene rubber,
(C) acrylonitrile butadiene rubber,
(D) at least one of a sulfenamide-based vulcanization accelerator and a thiazole-based vulcanization accelerator,
(E) at least one of a dithiocarbamate-based vulcanization accelerator and a thiuram-based vulcanization accelerator, and
(F) sulfur.

2. The high pressure hose outer surface rubber composition according to claim 1, further comprising aluminum hydroxide.

3. The high pressure hose outer surface rubber composition according to claim 1 or 2, wherein component (C) has an acrylonitrile amount of 26% by mass to 35% by mass.

4. The high pressure hose outer surface rubber composition according to any one of claims 1 to 3, not comprising a silane coupling agent.

5. The high pressure hose outer surface rubber composition according to any one of claims 1 to 4, comprising a sulfenamide-based vulcanization accelerator as component (D), and comprising a dithiocarbamate-based vulcanization accelerator as component (E).

6. A high pressure hose, having an outer rubber layer comprising the high pressure hose outer surface rubber composition according to any one of claims 1 to 5.
